# EUROPÄISCHE PATENTSCHRIFT

(11) **EP 2 594 653 B1**
(45) Veröffentlichungstag und Bekanntmachung des Hinweises auf die Patenterteilung: **27.08.2014**
(21) Anmeldenummer: 12192896.4
(22) Anmeldetag: 16.11.2012
(51) Int. Cl.: C21D 9/00, F16B 23/00, F16B 29/00, F16B 31/00

(54) **Ultrahochfeste Schraube mit hohem Streckgrenzverhältnis**
Ultra high strength screw having a high yield ratio
Vis ultra-résistante avec un rapport d'élasticité élevé

(30) Priorität: 18.11.2011 DE 102011055497
(43) Veröffentlichungstag der Anmeldung: 22.05.2013
(73) Patentinhaber: KAMAX Holding GmbH & Co. KG, 35315 Homberg (Ohm) (DE)
(72) Erfinder: Dieterle, Horst, 35096 Weimar (DE); Merschrod, Uwe, 36318 Schwalmtal-Storndorf (DE)
(74) Vertreter: REHBERG HÜPPE + PARTNER

(56) Entgegenhaltungen:
- EP-A1- 1 686 194
- EP-A1- 1 728 883
- DE-A1-102008 041 391
- JP-A- 9 263 875
- JP-A- 51 144 328

## Beschreibung

### TECHNISCHES GEBIET DER ERFINDUNG

Die Erfindung betrifft eine hochfeste Schraube, eine Schraubverbindung mit einer hochfesten Schraube und einem Bauteil und ein Verfahren zum Herstellen einer hochfesten Schraube.

### STAND DER TECHNIK

Eine ultrahochfeste Schraube mit einem Bainitgefüge, eine Schraubverbindung mit einer derartigen Schraube und einem Bauteil sowie ein Verfahren zum Herstellen einer derartigen Schraube sind aus der deutschen Patentanmeldung DE 10 2008 041 391 A1 bekannt. Das Bainitgefüge wurde durch Zwischenstufenvergüten erzeugt und erstreckt sich im Wesentlichen über den gesamten Querschnitt der Schraube. Die Schraube besitzt dadurch eine Zugfestigkeit Rₘ von mindestens 1.400 N/mm². Durch das Bainitgefüge weist die Schraube extrem hohe Festigkeitswerte in Verbindung mit maximalen Zähigkeitswerten auf. Die Schraube weist insbesondere ein Streckgrenzverhältnis von weniger als 90 % und bevorzugt von weniger als 80 % auf.

Weiterer Stand der Technik ist in dem Abschnitt "Stand der Technik" der oberhalb beschriebenen deutschen Patentanmeldung DE 10 2008 041 391 A1 beschrieben.

Weiterer Stand der Technik ist aus dem Prüfungsverfahren der oberhalb beschrieben deutschen Patentanmeldung DE 10 2008 041 391 bekannt. Es handelt sich dabei um die Dokumente DE 28 17 628 C2, DE 1 758 287 A, DE 1 558 505 A, DE 23 26 882 A, DE 698 07 297 T2, JP 09263875 A Patent Abstracts of Japan, DE 10 2005 004 712 A1 sowie "Verbindungselement "Pass-Dehn-Schraube"-Mehrfachverschraubung im überelastischen Bereich" in "Der Konstrukteur 4", 1986, S. 40, 42, 44.

Eine hochfeste Schraube mit einem Bainitgefüge ist weiterhin aus der japanischen Patentanmeldung JP 09 263 875 bekannt. In der dortigen Tabelle 2 ist in der mit der Einheit "MPa" gekennzeichneten achten Spalte von links die 0,2 %-Dehngrenze R_{p0,2} angegeben. In der rechts daneben angegebenen neunten Spalte sind Werte für die Zugfestigkeit Rₘ aufgeführt. Wenn man die Werte der Spalte 8 durch die der Spalte 9 teilt, kann man Streckgrenzverhältnisse von zwischen 0,95 und 0,96 errechnen.

### AUFGABE DER ERFINDUNG

Der Erfindung liegt die Aufgabe zugrunde, eine hochfeste Schraube mit hoher Duktilität bereitzustellen, die sich gut für einen Mehrfachanzug eignet.

### LÖSUNG

Die Aufgabe der Erfindung wird erfindungsgemäß mit den Merkmalen der unabhängigen Patentansprüche gelöst.

Weitere bevorzugte erfindungsgemäße Ausgestaltungen sind den abhängigen Patentansprüchen zu entnehmen.

### BESCHREIBUNG DER ERFINDUNG

Die Erfindung betrifft eine hochfeste Schraube mit einem Bainitgefüge, die ein Streckgrenzverhältnis von mindestens 0,95 aufweist.

Die Erfindung betrifft weiterhin eine Schraubverbindung mit einer derartigen hochfesten Schraube und einem Bauteil, welches mit der hochfesten Schraube verschraubt ist.

Die Erfindung betrifft auch ein Verfahren zum Herstellen einer hochfesten Schraube, bei dem eine ein Bainitgefüge aufweisende Schraube derart wärmebehandelt wird, dass die Schraube ein Streckgrenzverhältnis von mindestens 0,95 erhält.

### Definitionen

**Streckgrenzverhältnis**: Unter dem Streckgrenzverhältnis wird das Verhältnis der 0,2 %-Dehngrenze R_{p0,2} zur Zugfestigkeit Rₘ verstanden.

**Hochfeste Schraube:** Unter einer hochfesten Schraube wird eine Schraube mit einer Zugfestigkeit Rₘ von mindestens 800 N/mm² verstanden. Bisher wurden im Stand der Technik unter hochfesten Schrauben im Wesentlichen Schrauben der Festigkeitsklassen 8.8, 10.9 und 12.9 verstanden.

**Ultrahochfeste Schraube:** Unter einer ultrahochfesten Schraube wird eine Schraube mit einer Zugfestigkeit Rₘ von mindestens 1.400 N/mm² verstanden.

**Gleichmaßdehnung:** Unter der Gleichmaßdehnung wird die beim Zugversuch auf die Anfangslänge bezogene plastische Längenänderung bei Beanspruchung der Schraube mit der der Zugfestigkeit Rₘ zugeordneten Kraft verstanden. Die Gleichmaßdehnung gibt also an, dass sich die Schraube in diesem Bereich nicht einschnürt, sondern sich gleichmäßig dehnt.

### Weitere Beschreibung

Die neue Schraube hat also ein Streckgrenzverhältnis von zwischen 0,97 und 1,05. Bei einem Streckgrenzverhältnis von etwa 1 entspricht die Dehngrenze in etwa der Festigkeitsgrenze, wobei man dann von einem elastischen/idealplastischen Verhalten spricht. Die Schraube plastifiziert und erfährt dann beim weiteren Anziehen bis zum Bruch praktisch keine Verfestigung mehr. Eine solche Schraube ist optimal für einen Anzug der Schraubverbindung über streckgrenzgesteuerte Anzugsverfahren sowie Verfahren mit Fügemoment plus Drehwinkel geeignet.

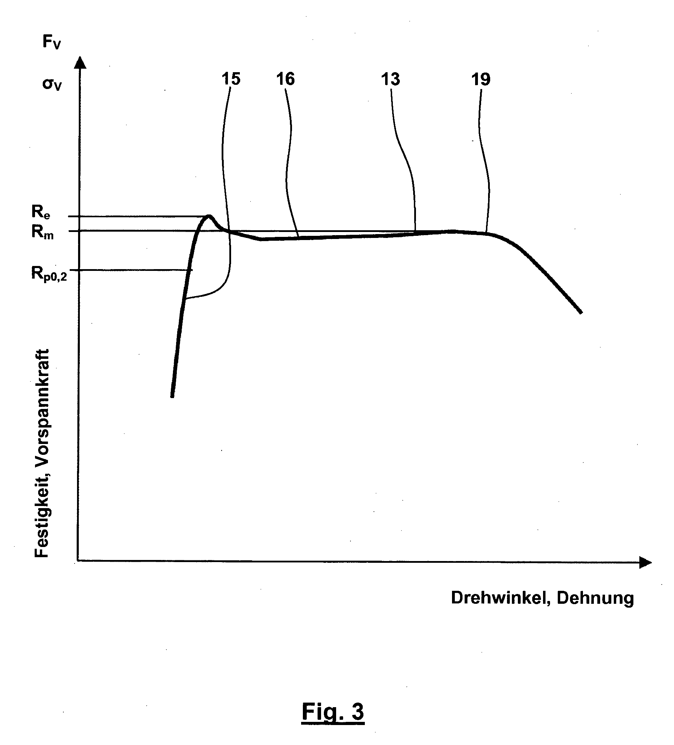

Streckgrenzverhältnisse von größer 1 bedeuten, dass die Schraube ihre maximale Festigkeit und damit Vorspannkraft beim Erreichen der Streckgrenze besitzt und die Vorspannkraft danach wieder leicht auf ein konstantes Niveau abfällt (siehe Fig. 3). Bei einem Anzug über Drehmoment und Drehwinkel ist dieser leichte Abfall jedoch unproblematisch.

Die neue Schraube mit dem hohen Streckgrenzverhältnis eignet sich auch besonders gut für ein streckgrenzgesteuertes Anzugsverfahren. Bei einem solchen Anzugsverfahren wird vom Schraubwerkzeug die Änderung der Steigung in der Drehmomenten/Drehwinkelkurve permanent überwacht. Da diese Steigung am Streckgrenzpunkt von der Hookeschen Geraden abweicht, kann der Streckgrenzpunkt über diese Veränderung detektiert werden. Im Stand der Technik war diese Detektierung jedoch praktisch nicht oder nur schwierig möglich, da die verwendeten Werkstoffe keine ausgeprägte Streckgrenze besitzen und damit der Übergang von der Hookeschen Geraden in den plastischen Bereich nur vergleichsweise langsam und uncharakteristisch erfolgt. Bei dem neuen Streckgrenzverhältnis der erfindungsgemäßen Schraube von etwa 1 ist dieser Übergang nun deutlich erkennbar und damit auch unter vergleichsweise rauen Betriebsbedingungen eindeutig und sauber detektierbar.

Die neue Schraube kommt dem elastischen/idealplastischen Verhalten sehr nahe und besitzt gleichzeitig ein hohes Umformvermögen. Aufgrund des hohen Streckgrenzverhältnisses und des guten Formänderungsvermögens wird eine nahezu vollständige Ausnutzung der Schraubenfestigkeit sowie des Umformvermögens und somit der maximal möglichen Vorspannkraft ermöglicht. Weiterhin ist es möglich, die maximal erreichbare Vorspannkraft mit nur geringer plastischer Formänderung der Schraube in mehreren Wiederholungsanzügen aufzubringen. Das gesamte Formänderungsvermögen der Schraube steht damit für Wiederholanzüge selbst bei mehrfachem überelastischen Anzug zur Verfügung.

Beim Anziehen von Schraubverbindungen mit einer hochfesten Schraube wird in der Praxis oftmals vorgegeben, dass der erste und der zweite Anzug der Schraubverbindung mit derselben Anzugsvorschrift durchgeführt werden sollen. Wenn dann im Stand der Technik mit den bekannten Schrauben mit einem Streckgrenzverhältnis von beispielsweise 0,8 diese Anzugsvorschrift zwei Mal oder häufiger angewendet wird, führt dies zu Problemen. Eine erste Möglichkeit besteht darin, die Schraubverbindung bis in das plastische Plateau nach dem Verlassen des elastischen Bereichs anzuziehen. Beim nächsten Anzug wird dann dieselbe Vorspannkraft erreicht, aber aufgrund der beim ersten Anzug eingetretenen Kaltverfestigung tritt bei gleichem Drehwinkel eine größere Plastifizierung der Schraube auf. Anders gesagt endet dieser zweite Anzug weiter rechts auf der die plastische Verformung darstellenden horizontalen Geraden. Es wurde also bereits ein Teil des im Plateau zur Verfügung stehenden Umformvermögens verbraucht, wobei dies dann entweder bereits beim zweiten Anzug oder bei folgenden Anzügen zum Einschnüren bzw. Versagen der Schraube führt. Eine zweite Möglichkeit besteht darin, dass das Anziehen der Schraubverbindung vor dem Erreichen des plastischen Plateaus beendet wird. Behält man die Anzugsvorschrift aus dem Erstanzug bei, ergeben sich bei Mehrfachverschraubung somit unterschiedliche Vorspannkräfte, was ebenfalls unerwünscht ist. Zur optimalen Ausnutzung der Schraubenfestigkeit ist es jedoch erforderlich, die Schraube deutlich über die Streckgrenze hinaus anzuziehen.

Durch das hohe Streckgrenzverhältnis der neuen Schraube von zwischen 0,97 und 1,05, vorzugsweise zwischen 0,99 und 1,03, wird nun die gleiche definierte Vorspannkraft auch bei einem mehrfachen Anzug der Schraubverbindung verlässlich erreicht. Das hohe Streckgrenzverhältnis bedeutet im Spannungs-Dehnungs-Diagramm einen scharfen Knick im Übergang zwischen dem linear-elastischen Bereich (der "Hookeschen Geraden") und dem plastischen Bereich. Dieser scharfe Knick kann verlässlich detektiert werden.

Die neue hochfeste Schraube weist ein Bainitgefüge auf, welches insbesondere zumindest teilweise durch Zwischenstufenvergüten erzeugt wurde. Das Bainitgefüge führt zu einer sehr hohen Zugfestigkeit bei einer ebenfalls sehr hohen Duktilität. Diese hohe Duktilität oder Zähigkeit unterscheidet das Bainitgefüge wesentlich von einem Martensitgefüge, welches im Stand der Technik in bekannter Weise durch Härten mit anschließendem Anlassen erzeugt wird. Bei dem Zwischenstufenvergüten erfolgt die Härtung stattdessen durch ein schnelles Abkühlen aus der Austenitphase durch eine isothermische Gefügeumwandlung in der Bainitstufe. Dabei verweilt das Teil, insbesondere die Schraube, bei einer isothermen Temperatur im Salzbad, bis die Gefügeumwandlung vom Austenit zum Bainit über den gesamten Querschnitt abgeschlossen ist. Der bei der martensitischen Härtung erforderliche Anlassvorgang kann vorzugsweise entfallen. Damit wird auch die Neigung zum Härteverzug verringert.

Mit dem Bainitisieren entfällt die direkte Gefügeumwandlung zu Martensit und damit die schroffe Gitterumwandlung mit hohen Gitterspannungen. Dies bedeutet, dass sich die Teile mit Bainitgefüge durch extrem hohe Festigkeitswerte in Verbindung mit maximalen Zähigkeitswerten auszeichnen. Zu weiteren Details und Vorteilen des Bainitgefüges wird auf die deutsche Patentanmeldung DE 10 2008 041 391 A1 der Anmelderin verwiesen.

Das hohe Streckgrenzverhältnis wird insbesondere nach dem Zwischenstufenvergüten durch bestimmte Verfahrensschritte erreicht. Bei einer ersten Variante besteht der diesbezügliche erste Verfahrensschritt in einer Kaltumformung der Schraube, wodurch die Versetzungsdichte im Werkstoff erhöht wird. Bei dieser Kaltumformung kann es sich insbesondere um eine Zugbeanspruchung ("Recken") in axialer Richtung handeln. Es sind aber auch kombinierte Zug- und Torsionsbeanspruchungen als Kaltumformung möglich. Wesentlich ist dabei, dass die eingebrachte Umformung zu einer gewissen Erhöhung der Versetzungsdichte im Werkstoff führt.

In einem nachgeordneten oder auch separaten Verfahrensschritt erfolgt eine Wärmebehandlung der Schraube bei vergleichsweise niedrigen Temperaturen. Die Wärmebehandlung bewirkt im Werkstoff Ausscheidungen und Diffusion von interstitiell gelösten Legierungselementen - wie insbesondere C, B und N -, die sich im Dilatationsbereich der Versetzungen sammeln und die Versetzungsbewegungen behindern. Dadurch wird der Widerstand erhöht und eine höhere Streckgrenze erreicht. Die Zugfestigkeit Rₘ wird dabei nicht oder nur geringfügig geändert (insbesondere um etwa 5 % erhöht), so dass im Wesentlichen eine Erhöhung der 0,2 %-Dehngrenze R_{p0,2} zur gewünschten Erhöhung des Streckgrenzverhältnisses beiträgt. Die Wärmebehandlung kann insbesondere bei einer Temperatur von zwischen 100 °C und 400 °C, vorzugsweise zwischen 120 °C und 250 °C, z. B. bei Behandlungsdauern von 0,5 bis 50 Stunden erfolgen. Die Dauer der Wärmebehandlung hängt vom Werkstoffzustand, der chemischen Zusammensetzung und der gewünschten Festigkeit ab.

Bei einer weiteren Variante des Herstellverfahrens zur Erreichung der hohen Streckgrenze entfällt der Schritt der dem Zwischenstufenvergüten nachfolgenden Kaltumformung. Es findet jedoch wiederum eine Wärmebehandlung der Schraube statt, wobei diese insbesondere bei einer Temperatur von zwischen 350 °C und 600 °C, vorzugsweise zwischen 400 °C und 550 °C, z. B. bei Behandlungsdauern von 0,5 bis 2 Stunden abläuft. Die Wärmebehandlung bewirkt in diesem Fall aufgrund der höheren Behandlungstemperaturen zum einen eine Verringerung der Zugfestigkeit aufgrund der Ausheilung von Versetzungen und zum anderen die Ausscheidung von Karbiden der Legierungselemente, wie z. B. Cr, Mo, Mn, Ni und V, Nb oder Ti. Dies führt zu einer Behinderung der Versetzungsbewegung und somit die Streckgrenze erhöht oder zumindest einer Reduzierung der Streckgrenze aufgrund der Ausheilung von Versetzungen entgegenwirkt. Die gewünschte Erhöhung des Streckgrenzverhältnisses wird bei diesem Verfahren somit durch eine Absenkung der Zugfestigkeit bei einer nahezu unveränderten Streckgrenze erreicht.

Unabhängig davon, ob die zweite Wärmebehandlung mit oder ohne eine zwischengeschaltete Kaltumformung stattfindet, kann sie vorteilhaft auch mit weiteren Verfahrensschritten der Herstellung der Schraube verbunden werden - insbesondere etwa mit einer ohnehin durchgeführten Oberflächenbeschichtung, die prozeßbedingt eine Wärmebehandlung etwa zum Verdampfen oder Einbrennen der Beschichtungsmaterialien erfordert. Solche Oberflächenbehandlungen werden u. a. zur Erhöhung des Korrosionsschutzes eingesetzt.

Die Schraube weist insbesondere eine Gleichmaßdehnung von mindestens 0,5 %, vorzugsweise von mindestens 0,6 %, auf. Dies bedeutet, dass das Plateau im Spannungs-Dehnungs-Diagramm vergleichsweise lang ausgebildet ist und somit ein Mehrfachanzug der Schraubverbindung oberhalb der Streckgrenze ohne Einschnüren und Versagen der Schraube möglich ist. Die gleiche definierte Vorspannkraft kann also gut auch bei einem zweiten, dritten, vierten, fünften, usw. Anzug der Schraubverbindung erreicht werden.

Hochfeste Schrauben werden bekanntlich durch Kaltumformung hergestellt, wobei das hierfür verwendete Ausgangsmaterial üblicherweise als "Draht" bezeichnet wird. Der für die neue hochfeste Schraube verwendete Draht kann aus kaltumformbarem unvergüteten Stahl bestehen und einen Kohlenstoffgehalt von etwa 0,2 % bis 0,6 % besitzen. Der Stahl kann Legierungsanteile, insbesondere Cr, Mo, Mn, Ni, V, Nb oder Ti von insgesamt mehr als etwa 1,1 % aufweisen.

Die Schraube kann als ultrahochfeste Schraube mit einer Zugfestigkeit Rₘ von mindestens 1400 N/mm² ausgebildet sein. Eine solche ultrahochfeste Schraube mit dem neuen Streckgrenzverhältnis stellt also auch beim Mehrfachanzug extrem hohe Vorspannkräfte reproduzierbar zur Verfügung. Eine solche Schraube wäre dann gemäß den üblichen Bezeichnungskonventionen den noch zu definierenden Festigkeitsklassen 14.10, 15.10, 16.10, 17.10 oder höher zuzuordnen.

Die Schraube kann eine Beschichtung in Form eines Gleitlacks oder Schmiermittels aufweisen, wobei dieses als Schmierstoff insbesondere MoS, MoS₂, Graphit, Polyethylen oder ein anderes Polymer aufweist. Alternativ kann die Schrauben phosphatiert und geölt sein. Derartige Beschichtungen stellen gleichmäßige Reibungszahlen auch bei Mehrfachanzügen bereit, so dass auch hierdurch die Verhältnisse bei Mehrfachanzügen vereinheitlicht sind.

Die Schraube kann einen geringen Anteil von Martensit von weniger als 15 % aufweisen. Das Merkmal, gemäß welchem die hochfeste Schraube ein Bainitgefüge aufweist, bedeutet nicht, dass vergleichsweise geringe Teile eines anderen Gefüges - z. B. Martensit oder Restaustenit - die Verwirklichung dieses Merkmals verlassen. Das Bainitgefüge besteht bevorzugt überwiegend aus unterem Bainit und kann sowohl Gefügeanteile des oberen als auch des unteren Bainits oder des körnigen Bainits beinhalten. Zusätzlich können geringe Anteile von Martensit gezielt eingestellt werden, d. h. Anteile von insbesondere weniger als etwa 15 %, Anteile von etwa 10 % oder weniger, Anteile zwischen 8 % und 11 % oder Anteile zwischen etwa 3 % und 5 %. Diese Anteile beziehen sich auf die Flächenanteile des Martensits in einer durchschnittlichen Querschnittsfläche der Schraube. Durch den Martensitanteil wird die Zugfestigkeit erhöht, wobei der Bainitanteil hoch genug bleibt, um die gewünschte hohe Duktilität zu erreichen.

Das neue Verfahren zum Herstellen der hochfesten Schraube weist die folgenden Schritte auf:
- Herstellen eines Bainitgefüges,
- Wärmebehandlung der Schraube derart, dass die Schraube ein Streckgrenzverhältnis von mindestens 0,95 erhält.

Vor diesem zweiten Verfahrensschritt kann gegebenenfalls ein weiterer Verfahrensschritt stattfinden, bei dem eine Kaltumformung der Schraube, z. B. durch axiales Recken, durchgeführt wird. Einen weiteren Verfahrensschritt stellt die Gewindefertigung dar. Diese kann an unterschiedlichen Zeitpunkten stattfinden, wie dies auch unterhalb noch genauer beschrieben wird.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Wenn hingegen nur die genaue Anzahl eines Merkmals angegeben werden soll, findet das Adjektiv "genau" vor dem jeweiligen Merkmal Verwendung.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt ein erstes Ausführungsbeispiel der neuen Schraubverbindung mit einer hochfesten Schraube und einem Bauteil.
- **Fig. 2**: zeigt ein schematisches Spannungs-Dehnungs-Diagramm einer ersten beispielhaften Ausführungsform der neuen Schraubverbindung im Vergleich zum Stand der Technik.
- **Fig. 3**: zeigt ein schematisches Spannungs-Dehnungs-Diagramm einer zweiten beispielhaften Ausführungsform der neuen Schraubverbindung.
- **Fig. 4**: zeigt ein schematisches Spannungs-Dehnungs-Diagramm der neuen Schraubverbindung gemäß Fig. 1 beim Mehrfachanzug.
- **Fig. 5**: zeigt ein Ablaufdiagramm einer ersten beispielhaften Ausführungsform des neuen Verfahrens zur Herstellung einer neuen Schraube.
- **Fig. 6**: zeigt ein Ablaufdiagramm einer zweiten beispielhaften Ausführungsform des neuen Verfahrens zur Herstellung einer neuen Schraube.

### FIGURENBESCHREIBUNG

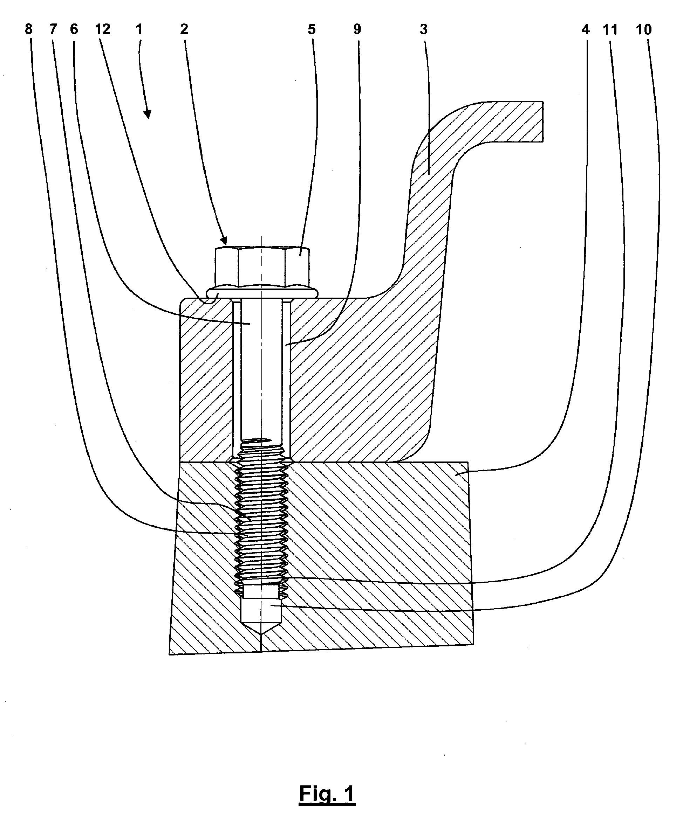

**Fig. 1** zeigt ein erstes Ausführungsbeispiel einer Schraubverbindung 1 mit einer hochfesten Schraube 2 sowie einem ersten Bauteil 3 und einem zweiten Bauteil 4. Die Schraube 2 weist einen Kopf 5, einen Schaftabschnitt 6 und einen Gewindeabschnitt 7 mit einem Außengewinde 8 auf. Das erste Bauteil 3 weist eine Bohrung 9 und das zweite Bauteil 4 eine Bohrung 10 auf. Die Bohrung 10 weist ein zum Außengewinde 8 der Schraube 2 korrespondierendes Innengewinde 11 auf. Über die ineinander eingreifenden Gewinde 8, 11 und die Kopfauflagefläche 12 des Kopfs 5 der Schraube 2 wird die für die sichere Schraubverbindung 1 erforderliche Klemmkraft erzielt.

Bei der Schraube 2 handelt es sich um eine ultrahochfeste Schraube mit einer Zugfestigkeit von mindestens 1400 N/mm². Die Schraube 2 weist ein insbesondere durch Zwischenstufenvergüten erzeugtes Bainitgefüge auf, welches sich im Wesentlichen über den gesamten Querschnitt der Schraube 2 erstreckt. Die Schraube 2 kann zunächst im Rahmen eines Trainieranzugs angezogen worden sein, wobei die Schraube 2 bis über ihre Streckgrenze hinaus angezogen wurde. Zum endgültigen Herstellen der Schraubverbindung 1 erfolgte dann das zweite Anziehen der Schraubverbindung 1 mindestens bis zu der aus dem Trainieranzug resultierenden erhöhten Streckgrenze.

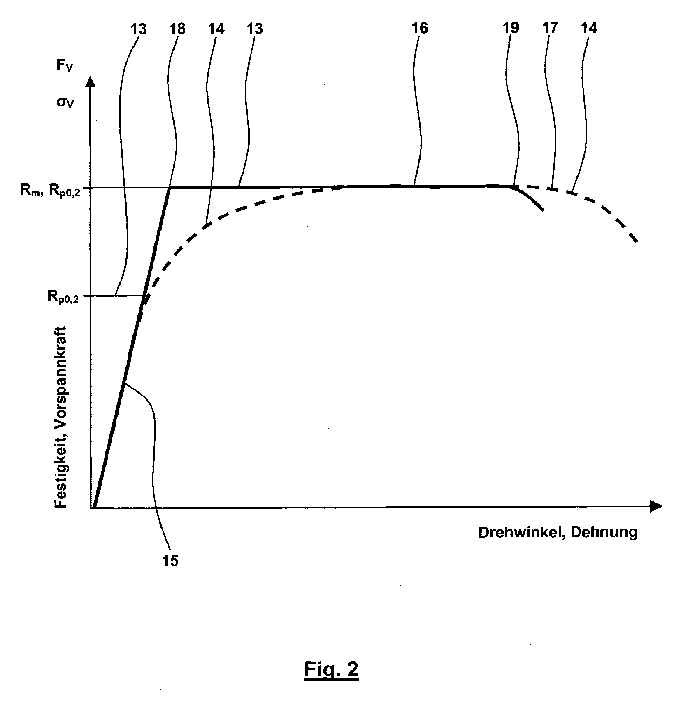

**Fig. 2** zeigt ein schematisches Spannungs-Dehnungs-Diagramm einer ersten beispielhaften Ausführungsform der erfindungsgemäßen Schraubverbindung 1 im Vergleich zu einer üblichen Schraubverbindung des Stands der Technik. Die in durchgezogener Linienführung dargestellte Kurve der erfindungsgemäßen Schraubverbindung 1 ist dabei mit dem Bezugszeichen 13 gekennzeichnet, während die in gestrichelter Linienführung dargestellte Kurve der Schraubverbindung des Stands der Technik mit dem Bezugszeichen 14 gekennzeichnet ist.

Bei der Schraubverbindung des Stands der Technik liegt der übliche Kurvenverlauf vor, d. h. nach dem Verlassen der Hookeschen Geraden 15 folgt ein sich über einen vergleichsweise großen Drehwinkel bzw. eine vergleichsweise große Dehnung erstreckender Übergangsbereich bis zum Erreichen des plastischen Plateaus 16. Dabei unterscheiden sich die 0,2 %-Dehngrenze R_{p0,2} und die Zugfestigkeit Rₘ wesentlich derart, dass ein Streckgrenzverhältnis von etwa 0,8 oder maximal 0,9 vorliegt. Das sich bei einem weiteren Anziehen der Schraubverbindung anschließende Plateau 16 hat nur eine vergleichsweise kurze Erstreckung und endet in einem Einschnürpunkt 17. Bei einem weiteren Anziehen der Schraubverbindung führt dies schließlich dann zum Versagen.

Wie in Fig. 2 gut erkennbar dargestellt ist, unterscheidet sich der Kurvenverlauf der Erfindung 13 wesentlich von dem des Stands der Technik 14. Die Hookesche Gerade 15 weist eine längere Erstreckung auf und geht aufgrund der Tatsache, dass das Streckgrenzverhältnis etwa 1 beträgt, in einem vergleichsweise scharfen Knickpunkt 18 in das Plateau 16 über. Die 0,2 %-Dehngrenze R_{p0,2} und die Zugfestigkeit Rₘ besitzen also in etwa den gleichen Wert. Das Plateau 16 weist eine im Vergleich zum Stand der Technik 14 sehr viel längere horizontale Erstreckung auf und endet dann im Einschnürpunkt 19. Diese vergleichsweise große Länge des Plateaus 16 bedeutet, dass die neue Schraube 2 eine vergleichsweise große plastische Formänderungsfähigkeit bei konstanter Spannung besitzt. Die daraus resultierende Gleichmaßdehnung kann insbesondere mindestens 0,5 % und vorzugsweise insbesondere mindestens 0,6 % betragen.

**Fig. 3** zeigt ein schematisches Spannungs-Dehnungs-Diagramm einer zweiten beispielhaften Ausführungsform der neuen Schraubverbindung 1. Im Unterschied zu der Ausführungsform gemäß Fig. 2 liegt hier ein Fall vor, bei dem die Streckgrenze Rₑ oberhalb der Zugfestigkeit Rₘ liegt. Der Übergang von der Hookeschen Gerade 15 zum Plateau 16 verläuft also anders als bei der Fig. 2, wobei erkennbar ist, dass auch hier ein vergleichsweise langes Plateau 16 zur Verfügung steht.

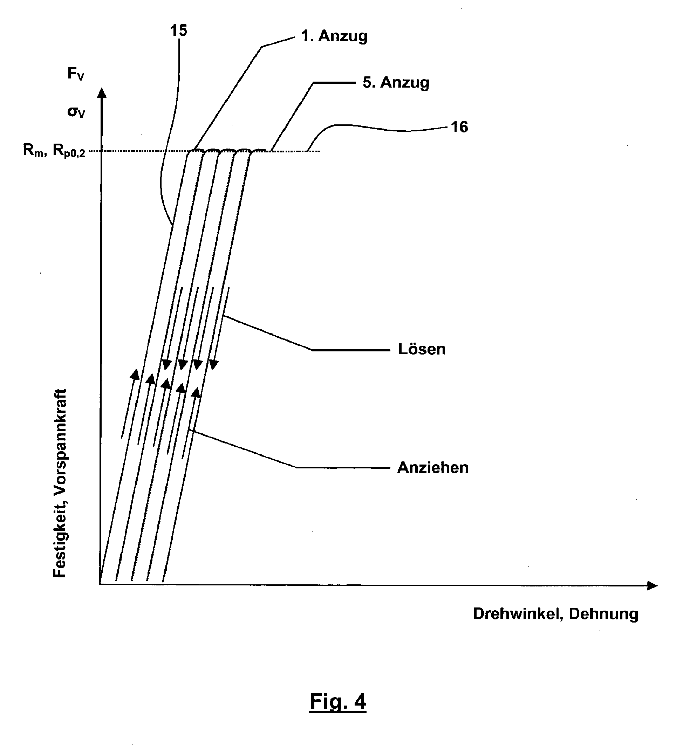

**Fig. 4** zeigt ein schematisches Spannungs-Dehnungs-Diagramm der neuen Schraubverbindung 1 gemäß Fig. 1 beim Mehrfachanzug mit Drehwinkelanzug oder kombiniertem Anzug mit Fügemoment und Drehwinkel. Im vorliegenden Beispiel sind fünf aufeinanderfolgende Anziehvorgänge ("Anzüge") dargestellt. Es ist erkennbar, dass nach dem Anziehen der Schraubverbindung 1 bis über das Erreichen der 0,2 %-Dehngrenze R_{p0,2} hinaus eine konstante Vorspannkraft der Schraube 2 entsteht, wobei nach dem ersten Anziehen (ganz linker Aufwärtspfeil) und dem nachfolgenden Lösen (ganz linker Abwärtspfeil) beim zweiten Anzug (zweiter Aufwärtspfeil von links) Rₘ und R_{p0,2} erst bei einem größeren Drehwinkel erreicht werden. In diesem Sinne wurde also bereits ein Teil des Plateaus 16 verbraucht. Entsprechendes geschieht dann auch beim dritten, vierten, fünften usw. Anzug. Im Vergleich zu Stand der Technik werden Rₘ und R_{p0,2} aber jeweils schon bei einem geringeren Drehwinkel erreicht und es wird nur ein geringer Teil des Plateaus 16 pro Anzug verbraucht. Aufgrund der hohen Gleichmaßdehnung weist die Schraube 2 auch genug Potential auf, um auch beim Mehrfachanzug mit einer gleichbleibenden Anzugsvorschrift gleichbleibende Vorspannkräfte bereitzustellen. Bei einem streckgrenzgesteuerten Anzugsverfahren, bei dem der Übergangspunkt bei der erfindungsgemäßen Schraube sehr gut detektiert werden kann, würden die Anzugs- und Lösekurven noch wesentlich dichter zusammen liegen, so dass die Schraube 2 praktisch unbegrenzt oft mehrfach angezogen werden kann.

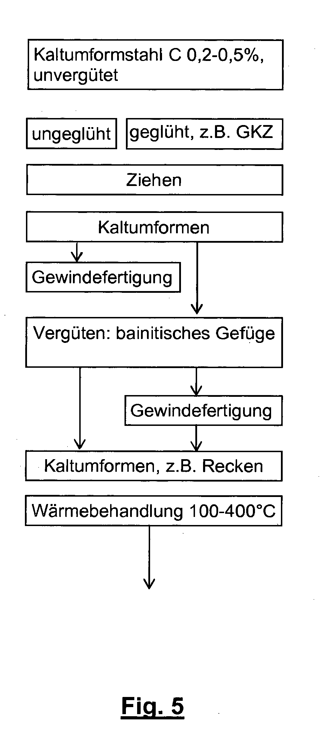

**Fig. 5** zeigt ein Ablaufdiagramm einer ersten beispielhaften Ausführungsform des neuen Verfahrens zur Herstellung einer Schraube 2. Innerhalb des Ablaufdiagramms sind dann teilweise Varianten durch unterschiedliche Angaben auf der linken und rechten Seite beschrieben. Ausgangsmaterial ist ein unvergüteter Kaltumformstahl mit einem Kohlenstoffgehalt von etwa 0,2 bis 0,5 %. Der Stahl kann entweder ungeglüht oder geglüht (z. B. durch Glühen auf kugeligem Zementit; "GKZ-Glühung") sein. Nach dem Ziehen schließt sich eine Kaltumformung an. Anschließend kann die Gewindefertigung erfolgen oder unter Auslassung dieses Schritts als nächstes das bainitische Gefüge, insbesondere durch Zwischenstufenvergüten, erzeugt werden. Wenn die Gewindefertigung noch nicht erfolgt ist, wird sie im nächsten Schritt realisiert. Anschließend erfolgt eine weitere Kaltumformung, z. B. durch Recken. Schließlich findet eine Wärmebehandlung, insbesondere bei einer Temperatur von zwischen etwa 100 °C und 400 °C statt.

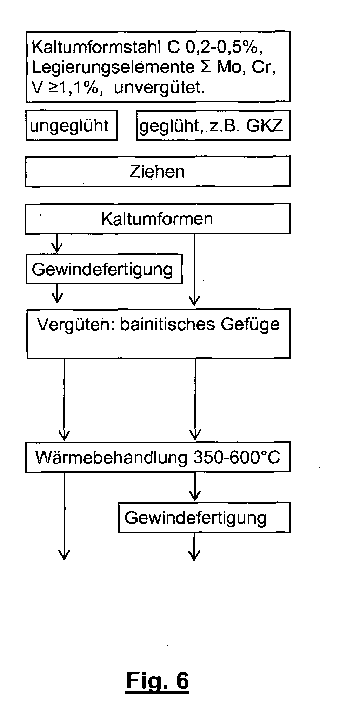

**Fig. 6** zeigt ein Ablaufdiagramm einer zweiten beispielhaften Ausführungsform des neuen Verfahrens zur Herstellung einer Schraube 2. In diesem Fall weist der Kaltumformstahl Legierungselemente von insgesamt mehr als etwa 1,1 % auf. Dabei kann es sich insbesondere um Cr, Mo, Mn, Ni, V, Nb und Ti handeln. Die nächsten Verfahrensschritte laufen dann wie bei der Ausführungsform gemäß Fig. 5 ab. Im Unterschied dazu entfällt der Schritt der Kaltumformung, z. B. durch Recken, und es findet stattdessen unmittelbar eine Wärmebehandlung statt, die hier dann jedoch bei höheren Temperaturen realisiert wird. Diese Temperaturen können insbesondere etwa zwischen 350 °C und 600 °C betragen. Sofern die Gewindefertigung durch Kaltumformung noch nicht vorher realisiert wurde, findet sie danach statt.

### BEZUGSZEICHENLISTE

- 1: Schraubverbindung
- 2: Schraube
- 3: Bauteil
- 4: Bauteil
- 5: Kopf
- 6: Schaftabschnitt
- 7: Gewindeabschnitt
- 8: Außengewinde
- 9: Bohrung
- 10: Bohrung
- 11: Innengewinde
- 12: Kopfauflagefläche
- 13: Erfindung
- 14: Stand der Technik
- 15: Hookesche Gerade
- 16: Plateau
- 17: Einschnürpunkt
- 18: Knickpunkt
- 19: Einschnürpunkt

## Patentansprüche

1. Hochfeste Schraube (2) mit einem Bainitgefüge, **dadurch gekennzeichnet, dass** sich das Bainitgefüge im Wesentlichen über den gesamten Querschnitt der Schraube (2) erstreckt und die Schraube (2) ein Streckgrenzverhältnis von zwischen 0,97 und 1,05 und eine Gleichmaßdehnung von mindestens 0,5 % aufweist.

2. Schraube (2) nach Anspruch 1, **dadurch gekennzeichnet, dass** das Bainitgefüge zumindest teilweise durch Zwischenstufenvergüten erzeugt ist.

3. Schraube (2) nach Anspruch 2, **dadurch gekennzeichnet, dass** das Streckgrenzverhältnis nach dem Zwischenstufenvergüten durch Kaltumformung und eine anschließende Wärmebehandlung der Schraube (2) erreicht wurde.

4. Schraube (2) nach Anspruch 3, **dadurch gekennzeichnet, dass** es sich bei der Kaltumformung der Schraube (2) um Recken in axialer Richtung handelt und die Wärmebehandlung der Schraube (2) bei einer Temperatur von zwischen 100 °C und 400 °C, insbesondere zwischen 120 °C und 250 °C, erfolgt ist.

5. Schraube (2) nach Anspruch 2, **dadurch gekennzeichnet, dass** das Streckgrenzverhältnis nach dem Zwischenstufenvergüten durch eine Wärmebehandlung der Schraube (2) bei einer Temperatur von zwischen 350 °C und 600 °C, insbesondere zwischen 400 °C und 550 °C, erreicht wurde.

6. Schraube (2) nach mindestens einem der vorhergehenden Ansprüche, **dadurch gekennzeichnet, dass** das Streckgrenzverhältnis zwischen 0,99 und 1,03 liegt.

7. Schraube (2) nach mindestens einem der vorhergehenden Ansprüche, **dadurch gekennzeichnet, dass** die Schraube (2) eine Gleichmaßdehnung von mindestens 0,6 % besitzt.

8. Schraube (2) nach mindestens einem der vorhergehenden Ansprüche, **dadurch gekennzeichnet, dass** die Schraube (2) aus einem Draht hergestellt wurde, der aus kaltumformbarem unvergüteten Stahl besteht und einen Kohlenstoffgehalt von 0,2 % bis 0,6 % besitzt.

9. Schraube (2) nach Anspruch 8, **dadurch gekennzeichnet, dass** der Stahl Legierungsanteile, insbesondere Cr, Mo, Mn, Ni, V, Nb und Ti von insgesamt mehr als 1,1 % aufweist.

10. Schraube (2) nach mindestens einem der vorhergehenden Ansprüche, **dadurch gekennzeichnet, dass** die Schraube (2) als ultrahochfeste Schraube mit einer Zugfestigkeit Rₘ von mindestens 1400 N/mm² ausgebildet ist.

11. Schraube (2) nach mindestens einem der vorhergehenden Ansprüche, **dadurch gekennzeichnet, dass**
die Schraube (2) eine Beschichtung in Form eines Gleitlacks oder Schmiermittels aufweist, das als Schmierstoff insbesondere MoS, MoS₂, Graphit, Polyethylen oder ein anderes Polymer aufweist, oder
die Schraube (2) phosphatiert und geölt ist.

12. Schraube (2) nach mindestens einem der vorhergehenden Ansprüche, **dadurch gekennzeichnet, dass** die Schraube (2) einen geringen Anteil an Martensit von weniger als 15 % aufweist.

13. Schraubverbindung (1), mit
einer hochfesten Schraube (2) nach mindestens einem der vorhergehenden Ansprüche, und
einem Bauteil, das mit der hochfesten Schraube (2) verschraubt ist.

14. Verfahren zum Herstellen einer hochfesten Schraube (2), insbesondere einer Schraube (2) nach mindestens einem der vorhergehenden Ansprüche, mit den Schritten
Zwischenstufenvergüten der Schraube (2) zum Erzeugen eines Bainitgefüges, das sich im Wesentlichen über den gesamten Querschnitt der Schraube (2) erstreckt, und danach
a) Kaltumformung der Schraube (2) durch Recken in axialer Richtung und anschließende Wärmebehandlung der Schraube (2) bei einer Temperatur von zwischen 100 °C und 400 °C derart, dass die Schraube (2) ein Streckgrenzverhältnis von mindestens 0,95 erhält, oder
b) Wärmebehandlung der Schraube (2) bei einer Temperatur von zwischen 350 °C und 600 °C derart, dass die Schraube (2) ein Streckgrenzverhältnis von mindestens 0,95 erhält.

## Claims

1. A high-strength screw (2) having a bainite structure, **characterised in that** the bainite structure substantially extends over the entire cross-section of the screw (2) and the screw (2) has a yield ratio between 0.97 and 1.05 and a uniform elongation of at least 0.5 %.

2. The screw (2) of claim 1, **characterised in that** the bainite structure is at least partly produced by austempering.

3. The screw (2) of claim 2, **characterised in that** the yield ratio has been realised after austempering by cold forming and subsequent heat treatment of the screw (2).

4. The screw (2) of claim 3, **characterised in that** cold forming of the screw (2) is stretching in an axial direction and heat treatment of the screw (2) is realised at a temperature between 100 °C and 400 °C, especially between 120 °C and 250 °C.

5. The screw (2) of claim 2, **characterised in that** the yield ratio after austempering is realised by heat treatment of the screw (2) at a temperature between 350 °C and 600 °C, especially between 400 °C and 550 °C.

6. The screw (2) of at least one of the preceding claims, **characterised in that** the yield ratio is between 0.99 and 1.03.

7. The screw (2) of at least one of the preceding claims, **characterised in that** the screw (2) has a uniform elongation of at least 0.6 %.

8. The screw (2) of at least one of the preceding claims, **characterised in that** the screw (2) has been produced from wire made of cold-formable non-hardened and non-tempered steel and having a carbon content of 0.2 % to 0.6 %.

9. The screw (2) of claim 8, **characterised in that** the steel includes alloying elements, especially Cr, Mo, Mn, Ni, V, Nb and Ti with a total share of more than approximately 1.1 %.

10. The screw (2) of at least one of the preceding claims, **characterised in that** the screw (2) is designed as an ultra-high-strength screw (2) having a tensile strength Rₘ of at least 1400 N/mm².

11. The screw (2) of at least one of the preceding claims, **characterised in that**
the screw (2) includes a coating in the form of an anti-friction lacquer or a lubricant, the lubricant including especially MoS, MoS₂, graphite, polyethylene or another polymer as a lubricating agent, or
the screw (2) is phosphated and oiled.

12. The screw (2) of at least one of the preceding claims, **characterised in that** the screw (2) includes a low share of martensite of less than 15 %.

13. A screw joint (1), including
a high-strength screw (2) according to at least one of the preceding claims, and
a component screwed to the high-strength screw (2).

14. A method for producing a high-strength screw (2), especially a screw (2) according to at least one of the preceding claims, comprising the steps
austempering of the screw (2) to produce a bainite structure which extends substantially over the entire cross-section of the screw (2), and subsequently
a) cold forming of the screw (2) by stretching in an axial direction and subsequent heat treatment of the screw (2) at a temperature between 100 °C and 400 °C in such a way that the screw (2) attains a yield ratio of at least 0.95, or
b) heat treatment of the screw (2) at a temperature between 350 °C and 600 °C in such a way that the screw (2) attains a yield ratio of at least 0.95.

## Revendications

1. Vis haute résistance (2) à structure bainitique, **caractérisée en ce que** la structure bainitique s'étend pour l'essentiel sur toute la section transversale de la vis (2), et la vis (2) présente un rapport limite d'élasticité/résistance à la traction compris entre 0,97 et 1,05 et un allongement avant striction d'au moins 0,5 %.

2. Vis (2) selon la revendication 1, **caractérisée en ce que** la structure bainitique est au moins partiellement produite par une trempe étagée bainitique.

3. Vis (2) selon la revendication 2, **caractérisée en ce que** le rapport limite d'élasticité/résistance à la traction a été atteint après la trempe étagée bainitique par façonnage à froid, suivie d'un traitement thermique de la vis (2).

4. Vis (2) selon la revendication 3, **caractérisée en ce que**, pour ce qui concerne le façonnage à froid de la vis (2), il s'agit d'un étirage dans la direction axiale, et le traitement thermique de la vis (2) est réalisé à une température comprise entre 100 °C et 400 °C, en particulier entre 120 °C et 250 °C.

5. Vis (2) selon la revendication 2, **caractérisée en ce que** le rapport limite d'élasticité/résistance à la traction a été atteint après la trempe étagée bainitique par un traitement thermique de la vis (2) à une température comprise entre 350 °C et 600 °C, en particulier entre 400 °C et 550 °C.

6. Vis (2) selon au moins l'une des revendications précédentes, **caractérisée en ce que** le rapport limite d'élasticité/résistance à la traction est compris entre 0,99 et 1,03.

7. Vis (2) selon au moins l'une des revendications précédentes, **caractérisée en ce que** la vis (2) possède un allongement avant striction d'au moins 0,6 %.

8. Vis (2) selon au moins l'une des revendications précédentes, **caractérisée en ce que** la vis (2) a été fabriquée à partir d'un fil métallique constitué d'un acier non trempé façonné à froid, ayant une teneur en carbone de 0,2 à 0,6 %.

9. Vis (2) selon la revendication 8, **caractérisée en ce que** l'acier contient des produits d'alliage, en particulier Cr, Mo, Mn, Ni, V, Nb et Ti, selon une teneur totale supérieure à 1,1 %.

10. Vis (2) selon au moins l'une des revendications précédentes, **caractérisée en ce que** la vis (2) est constituée d'une vis à très haute résistance ayant une résistance à la traction Rₘ d'au moins 1400 N/mm².

11. Vis (2) selon au moins l'une des revendications précédentes, **caractérisée en ce que**
la vis (2) comprend un revêtement sous forme d'un vernis lubrifiant ou d'une composition lubrifiante, qui en tant que lubrifiant comprend en particulier du MoS, du MoS₂, du graphite, du polyéthylène ou un autre polymère, ou que
la vis (2) est phosphatée et huilée.

12. Vis (2) selon au moins l'une des revendications précédentes, **caractérisée en ce que** la vis (2) présente une faible teneur en martensite, inférieure à 15 %.

13. Assemblage vissé (1), comportant
une vis haute résistance (2) selon au moins l'une des revendications précédentes, et
un composant qui est vissé à l'aide de la vis haute résistance (2).

14. Procédé de fabrication d'une vis haute résistance (2), en particulier d'une vis (2) selon au moins l'une des revendications précédentes, comportant les étapes:
trempe étagée bainitique de la vis (2) pour produire une structure bainitique qui pour l'essentiel s'étend sur la totalité de la section transversale de la vis (2), puis
a) façonnage à froid de la vis (2) par étirage dans la direction axiale, puis traitement thermique de la vis (2) à une température comprise entre 100 °C et 400 °C, de façon que la vis (2) présente un rapport limite d'élasticité/résistance à la traction d'au moins 0,95, ou
b) traitement thermique de la vis (2) à une température comprise entre 350 °C et 600 °C, de telle sorte que la vis (2) présente un rapport limité d'élasticité/résistance à la traction d'au moins 0,95.
